# EUROPEAN PATENT APPLICATION

(11) **EP 4 604 143 A1**
(43) Date of publication of application: **20.08.2025**
(21) Application number: 24158087.7
(22) Date of filing: 16.02.2024
(51) Int. Cl.: H01F 1/00

(54) **JANUS MICROPARTICLES HAVING PIEZOELECTRIC AND MAGNETIC PROPERTIES**

(71) Applicant: Max-Planck-Gesellschaft zur Förderung der Wissenschaften e.V., 80539 München (DE)
(72) Inventor: HAN, Mertcan, 70569 Stuttgart (DE); YILDIZ, Erdost, 70569 Stuttgart (DE); BOZUYUK, Ugur, 70569 Stuttgart (DE); SITTI, Dr. Metin, 70569 Stuttgart (DE)
(74) Representative: Richardt Patentanwälte PartG mbB

(57) **Abstract**

Disclosed is a Janus microparticle (100). The Janus microparticle comprises at least a first portion (106) and a second portion (122). The first portion (106) comprises a ferromagnetic material and the second portion (122) comprises a piezoelectric material.

## Description

### FIELD OF THE INVENTION

The invention relates to the field of Janus microparticles, control apparatuses for controlling Janus microparticles, methods of operating control apparatuses for controlling Janus microparticles, systems comprising Janus microparticles and control apparatuses, methods for controlling Janus microparticles and computer programs for controlling Janus microparticles.

### BACKGROUND

In recent years, the need for precise, targeted therapeutic interventions has become increasingly apparent across various domains of medicine and biomedical research. Traditional approaches often suffer from a lack of specificity, leading to systemic side effects, reduced efficacy, and the need for higher therapeutic doses. The emergence of micro- and nanotechnology has offered promising avenues to address these challenges, with Janus microparticles representing a particularly innovative solution.

Janus microparticles, named after the Roman god Janus, known for his two faces, are characterized by their biphasic nature, possessing two distinct sides with different chemical or physical properties. This unique configuration endows them with multifunctional capabilities, enabling simultaneous engagement in dual tasks such as targeted delivery and controlled activation or response.

It is an objective to provide for an improved Janus microparticles, an improved control apparatus for controlling Janus microparticles, an improved method of operating control apparatuses for controlling a Janus microparticle, an improved system comprising a Janus microparticle and a control apparatus, an improved method for controlling a Janus microparticle and an improved computer program for controlling a Janu microparticle. The objectives underlying the invention are solved by the features of the independent claims.

### SUMMARY OF THE INVENTION

In one aspect a Janus microparticle is disclosed. The Janus microparticle comprises at least a first portion and a second portion, wherein the first portion comprises a ferromagnetic material and the second portion comprises a piezoelectric material. The first portion may be magnetized.

One advantage of the Janus microparticle could be the dual functionality of the two different portions of the microparticle. By having two distinct portions, the Janus microparticle could perform two different functions, e.g., one function requiring ferromagnetic properties and/or materials, and a second function requiring piezoelectric properties and/or materials. The portion comprising a ferromagnetic material may be used to magnetically control or steer the microparticle and enabling locomotion, while the other portion comprising a piezoelectric material may be piezoelectrically excited by e.g., an ultrasound signal, thus enabling e.g. focused ultrasound-based neural stimulation, as the ultrasound signal may mechanically excite the second portion to piezoelectrically generate an electrical stimulation signal configured to stimulate neurons. Hence, the microparticle may be magnetically controlled or steered to a target location and then may be mechanically excited to piezoelectrically generate an electrical stimulus signal for stimulation of a biological target structure.

Another use case could be that the Janus microparticles may be engineered to carry therapeutic agents on one side while the other side is modified for magnetically controlling the Janus microparticle to be steered to specific cells or tissues, enhancing the efficacy and specificity of treatments. Another use case may be that the distinct sides of Janus microparticles can be designed to respond differently to environmental stimuli such as in this case a magnetic field or an excitation signal, e.g., an ultrasonic signal. This could render the Janus microparticle as an excellent candidate for creating responsive materials that can change their properties in real-time, which is e.g., useful in stimulation devices.

Another advantage may be that by having properties enabling magnetic steering to the target site, only a low-energy excitation signal for piezoelectrical excitation of the second portion may be necessary, thus resulting in e.g., safe operation in deep and strongly absorbing tissue without off-target side effects. In addition, the properties of the Janus microparticle, in particular the magnetic properties, may prevent an undesired diffusion and internalization of particles in the target area towards off-target tissue, which could foster target selectivity, spatial resolution, and long-term use due to inhibited degradation of stimulation performance of the Janus microparticle.

Another advantage could be that, as the electric field generated by e.g., piezoelectrically exciting the second portion of the particle, rapidly decays, the steering of the microparticle to the vicinity of a target neuron may be advantageous in a way that only a low concentration of particles in the vicinity of the target site may be required to generate an electric field suitable for e.g., stimulation of the target site.

Another advantage could be that the properties of the Janus microparticle may enable clinically relevant high-frequency (100-200 Hz) and ideally decoupled neural stimulation of specific neural circuits without requiring genetic modification of neurons, as the portion comprising the piezoelectric material may be excited to elicit said stimulation parameters.

For example, the Janus microparticle further comprises a third portion comprising a dielectric material. It could further comprise a third portion comprising a non-conductive material. For example, the dielectric material comprises a porous, a plain, or a hollow material. The non-conductive material may comprise a porous, a plain, or a hollow material. The third portion may have a spherical shape. For example, the diameter of the spherical third portion is 0,03-300 µm, preferably 2-100 µm, in particular 10-30 µm. The first portion could be arranged on a first surface portion of the third portion. For example, the second portion is arranged on a second surface portion of the third portion.

The third portion could function as a carrier portion for the first portion and/or the second portion, comprising the dielectric or the non-conductive carrier material. Hence, one advantage could be that the third portion could support and/or convey the other portions of the Janus microparticle and could improve its overall stability. By comprising a porous material, the overall surface of the third portion may be increased, leaving more room for e.g., surface functionalization while maintaining low weight. By comprising a plain material, the overall stability of the third portion and/or the Janus microparticle may be increased. By comprising a hollow material, the overall weight and/or density of the Janus microparticle may be decreased.

Another advantage of the third portion comprising a dielectric or non-conductive carrier material serving as a carrier portion for the first portion and/or the second portion could be a reduction in costs, as e.g., only a surface of the third portion is covered with either the first portion and/or the second portion, and the third portion comprises a cheaper material than the first portion and/or the second portion. In that case, the functionality of the Janus microparticle would be the same, e.g., it could still comprise the same characteristics as if no third portion would exist, by simultaneously reducing the need for the material of the first and/or the second portion. This could especially be true if the third portion has a spherical shape, as in that case the surface of the first portion and/or the second portion is maximized while simultaneously minimizing the cost of materials.

Another advantage of the third portion having a spherical shape could be a cheap and easy manufacturing process, as only the third phase of the third portion needs to be functionalized with the first portion and/or the second portion, e.g., via surface functionalization, sputtering and/or coating. By having a third portion serving as a carrier portion for the other portions, a quick and cheap mass production off the Janus microparticle may be possible.

Another advantage of the third portion having a spherical shape with a diameter in the range of 0,03-300 µm, preferably 2-100 µm, in particular 10-30 µm is that overall, this could result in the Janus microparticle being biologically cell sized. This may allow for more efficient and targeted interactions with cells, leading to improved outcomes in drug delivery, diagnostics, and therapy. Advantages could be increased biomimicry and camouflage, a more targeted delivery due to similar size of the microparticle to cells and an improved interaction with cellular structures. Microparticles of cellular size may interact more effectively with cellular structures and membranes, which could enhance the delivery of the microparticle to specific cellular compartments or facilitate interactions with cell surface receptors, leading to improved signaling or therapeutic responses.

For example, the Janus microparticle further comprises a coupling element coupling the second portion to the third portion. The coupling could comprise a coupling induced by surface functionalization. For example, the second portion comprises nanoparticles. The nanoparticles of the second portion may have a spherical shape with a diameter in the range of 100-500 nm, in particular 200-300 nm.

In an example, the surface functionalization comprises treating the second portion and the third portion with silane coupling agents. For example, the silane coupling agents comprise 3-aminopropyltriethoxysilane (APTES) or (3-glycidyloxypropyl)trimethoxysilane (GPTMS). The surface functionalization could further comprise any one of the following: a direct coupling between functional groups on the surface of the second portion and the third portion, a coupling of the functional groups on the surface of the second portion and the third portion using a linker. For example, the linker is any one of the following: a carbodiimide, in particular 1-Ethyl-3-(3-dimethylaminopropyl)carbodiimide, an isothiocyanate, an aldehyde, a diamin, a dithiol, a streptavidin binding at least two biotin molecules.

In an example, the surface functionalization comprises the second portion and the third portion comprising amino groups, wherein both amino groups bond to a respective biotin molecule, wherein both respective biotin molecules bind to a same avidin molecule.

An advantage of coupling the second portion to the third portion using surface functionalization could be an improved compatibility and dispersion: surface functionalization may enhance the compatibility between different materials, such as in composites, by introducing surface groups that interact favorably with the matrix of the different materials. This may improve dispersion and bonding at the interface, leading to composites with better mechanical, thermal, and electrical properties.

Another advantage could be selective binding as well as enhanced stability and durability: By attaching specific functional groups or biomolecules to the surface of the portions, materials could be engineered to selectively bind to certain chemicals, ions, or biological entities. Furthermore, surface functionalization could increase the stability of materials by making them more resistant to environmental factors such as temperature, pH, and solvents.

Furthermore, surface functionalization could increase biocompatibility of the microparticles and lead to non-toxicity. Surface functionalization may be used to make materials biocompatible and non-toxic, leading to benign interactions with biological tissue and biomaterials. Also, mechanical properties could be enhanced. Surface functionalization may also be used to modify the mechanical properties of materials, such as increasing strength, flexibility, or wear resistance.

For example, the first portion comprises Nickel, Iron-Platinum with an L1₀ tetragonal crystal structure, Iron-Platinum, Samarium-Cobalt, Aluminum-Nickel-Cobalt Alloys, Ferrite or Cobalt-Platinum.

One advantage of the first portion comprising said materials could be a high or very high coercivity, a high magnetic strength, an excellent temperature stability, a significant corrosion resistance and an especially high resistance to demagnetization. Their strong magnetic properties when magnetized my foster the use of the first portion in use cases where a magnetization may be required, and demagnetization is undesirable.

For example, the second portion comprises barium titanate, polyvinylidene fluoride, poly (vinylidene fluoride-co-trifluoroethylene), lead zirconate titanate or zinc oxide.

One advantage of the second portion comprising said materials could be their excellent piezoelectric properties, rendering them suitable materials for the second portion to elicit piezoelectric properties. Said materials may elicit non-corrosiveness, high resistance and strength against chemicals and temperature. They may elicit biocompatibility. Furthermore, said materials may easily be bioconjugated to e.g., the third portion of the microparticle, allowing for a Janus microparticle with different portions having distinct physical properties. Said materials may elicit a high piezoelectric effect.

For example, the third portion comprises silica, polystyrene or polymethylmethacrylate.

One advantage of the third portion comprising said materials could be their chemical inertness, their high resistance against acidic and basic environments, their high resistance against high temperatures, their hardness and durability, their availability to form a porous structure, the simplicity with which said materials can be processed into various shapes and sizes, e.g., into a spherical shape, their inexpensiveness, their excellent thermal and electrical insulation properties, their lightweightness and/or low density, their biocompatibility and their non-corrosiveness.

For example, the first portion is realized as a film with a thickness of 2-1000 nm, preferably 20-100 nm, in particular 50-70 nm.

One advantage of realizing a portion as a film is a decreased cost of materials for said portion. Hereby, the surface area of the portion may be maximized and the magneticity may be enhanced. Thin films, in cases they are ferromagnetic, may provide excellent pathways for magnetization and magneticity with minimal material usage, resulting in economic efficiency, as thin film technology may be more material- and cost-efficient compared to using bulk materials, especially when expensive ferromagnetic materials may be required for their specific properties.

Another advantage may be the tailoring of the magnetic properties of a portion realized as a film. The magnetic properties of thin films may be precisely controlled through thickness and alloy composition and thus, e.g., may benefit magnetization and/or the usage of the first portion in use cases where magnetic properties could be required. Furthermore, the corrosion resistance of a portion, when realized as a film, could be increased, as the application of a thin film of a corrosion-resistant metal onto a less resistant substrate may protect against environmental degradation.

Another advantage could be that films can effectively dissipate heat, serving as thermal interfaces that enhance cooling and reliability. Furthermore, thin films that may be deposited on flexible substrates, may enable the creation of flexible composites that can conform to various shapes. By realizing a portion as a film, the mechanical properties of the resulting composite may be controlled. The mechanical properties of films, such as hardness and elasticity, may be finely tuned by adjusting the deposition parameters, film thickness, and composition. This allows for the design of surfaces with specific mechanical performance.

Another advantage could be the readiness to use the thin film within mass production and/or for rapid prototyping. The processes that may be used for depositing films, such as sputtering and chemical vapor deposition, may be compatible with rapid prototyping and could be easily scaled up for mass production. Furthermore, alloy compositions could be customizable. Thin films may be made from custom alloy compositions that may be difficult to produce in bulk form, allowing for the tailoring of properties of the materials.

For example, the Janus microparticle further comprises a fourth portion comprising a biocompatible non-corrosive metal or alloy fully covering a surface of the first portion. The biocompatible non-corrosive metal may be impermeable for ions. The biocompatible non-corrosive metal or alloy could comprise gold, platinum, or titanium. For example, the fourth portion is realized as a film with a thickness of 5-50 nm, in particular 15-30 nm.

One advantage of having the fourth portion covering a surface of the first portion could be that the microparticle may be used in biological environments and may withstand the conditions it may be exposed to without degrading or causing adverse reactions. One advantage of using biocompatible metals or alloys may be their compatibility with biological tissues and fluids. These materials may not induce a toxic or immune response when implanted or inserted into the body or into biological tissue, potentially making them suitable for medical implants, prosthetics, and devices in direct contact with bodily tissues.

Furthermore, non-corrosive metals or alloys may resist degradation in harsh environments, including the saline conditions that may be found within the human body. This resistance to corrosion could ensure the long-term integrity and functionality of medical devices such as microparticles and may prevent metal ion release that could lead to toxicity or adverse tissue reactions.

Another advantage could be that biocompatible, non-corrosive metals and or alloys may withstand mechanical stress and wear and thus may their structural integrity over time. This is crucial for devices that may be subject to continuous or repetitive mechanical forces, such as microparticles. In addition, materials such as biocompatible, non-corrosive metals or alloys may be engineered to minimize biofouling-the potential accumulation of biological material on their surfaces-which could be essential for devices like microparticles that may need to maintain clear interfaces with biological tissues or fluids. In addition, another advantage could be that surface properties of the fourth portion may be tailored through various treatments and coatings to enhance their performance, including modifying surface roughness. Hence, by using biocompatible, non-corrosive metals or alloys, e.g., in the form of a (thin film), in medical devices such as microparticles, safety, functionality, and longevity may be fostered.

For example, the third portion further comprises antibodies. The third portion could comprise antibodies on a portion of the third portion. The antibodies could comprise antibodies that bind to specific antigens. The specific antigens may comprise G protein-activated inward rectifier potassium channel 2, GIRK2, and the antibodies being specific to bind to dopaminergic neurons, in particular to bind to GIRK2 comprised by dopaminergic neurons. The specific antigens may comprise antigens comprised by any one or a combination of the following neurons: glutamatergic, GABAergic, serotonergic, cholinergic, noradrenergic, peptidergic, adrenergic, histaminergic, purinergic, and the antibodies being specific to bind to any one or a combination of the following neurons: glutamatergic, GABAergic, serotonergic, cholinergic, noradrenergic, peptidergic, adrenergic, histaminergic, purinergic.

For example, the third portion could comprise an antibody coupling element coupling antibodies to the third portion. The coupling may comprise a coupling induced by surface functionalization.

One advantage of a portion comprising antibodies could be that the portion or the microparticle as a whole may specifically target specific antigens, as antibody-functionalized microparticles may leverage the specificity of antibody-antigen interactions to achieve targeted delivery of the microparticle. By utilizing antibodies that may specifically bind to target antigens, these microparticles may selectively interact with specific cells, proteins, or pathogens, in particular with specific neurons. After coupling to the specific neuron, specific effects could be achieved, e.g., a stimulation of the neuron via an electric stimulation signal as a result of piezoelectrically exciting the second portion. Microparticles carrying therapeutic antibodies may deliver the stimulation directly to the target cells or tissues and thus may enhance the efficacy of the treatment while potentially minimizing side effects.

Another advantage could be enhanced versatility. The surface of microparticles, e.g., the surface of the third portion, may be modified to carry different types of antibodies, allowing for the simultaneous stimulation of multiple targets. Furthermore, a reduced immune response and an improved stability may be achieved. When designed with biocompatibility in mind, antibodycoated microparticles may minimize unwanted immune responses. Encapsulating antibodies within or attaching them to the surface of microparticles may protect them from degradation in harsh environments and thus, could extend their shelf life and maintain their functional integrity during storage and use.

In another aspect, a control apparatus for controlling a Janus microparticle is disclosed. The Janus microparticle comprises at least a first portion and a second portion, wherein the first portion comprises a ferromagnetic material and the second portion comprises a piezoelectric material. The control apparatus comprises a processor and a memory storing program instructions executable by the processor, execution of the program instructions by the processor causes the control apparatus to receive information about a location of a target neuron. Furthermore, execution of the program instructions by the processor causes the control apparatus to generate a magnetic steering field configured to steer the Janus microparticle to a vicinity of the target neuron, wherein the vicinity is a distance of 100 µm or less, in particular 60 µm or less. In addition, execution of the program instructions by the processor causes the control apparatus to generate an ultrasonic excitation signal, wherein the ultrasonic excitation signal is configured to piezoelectrically excite the second portion to generate an electrical stimulation signal.

The electrical stimulation signal could lead to an electrical change in the membrane of the target neuron. The electrical change in the membrane of the target neuron could comprise a depolarization or a hyperpolarization. The electrical change in the membrane of the target neuron, in particular the depolarization or the hyperpolarization, could comprise an efflux of neurotransmitters. The neurotransmitters could comprise any one or a combination of the following: glutamate, GABA, serotonin, acetylcholine, noradrenaline, substance P, neuropeptide Y, opioid peptides, in particular endorphins, adrenaline, histamine, adenosine, adenosine triphosphate.

One advantage of the control apparatus could be the achievement of a targeted stimulation. The ability to direct a Janus microparticle to a specific neuron or group of neurons may allow for highly localized stimulation via the electrical stimulation signal, minimizing the activation of surrounding neural tissue. This specificity could lead to more precise studies of neural circuits and potentially more targeted therapies for neurological conditions. In addition, a non-invasive or minimally invasive targeted therapy may be achieved. Magnetic steering of microparticles could be achieved externally, for example, by a uniform magnetic field or by a non-uniform magnetic field, reducing the need for invasive procedures to position stimulation devices. Even when some level of invasiveness may be required, it may be significantly less than implanting larger devices.

Another advantage may be that the stimulation itself may be adjustable. The electrical stimulation signal that may be generated by the Janus microparticle, e.g., the ultrasonic excitation signal, may be adjusted in real-time to achieve the desired neural response. This flexibility may allow researchers and clinicians to optimize stimulation parameters for different experimental or therapeutic needs. Furthermore, the tissue damage may be minimized. Due to the e.g., small size of Janus microparticles and the precision with which they could be controlled magnetically, the risk of tissue damage may be minimized compared to larger implants or electrodes. This may be particularly important for repeated stimulation sessions or long-term studies or therapies.

Another advantage may be an enhances versatility in application. The technology may be used in various applications, including e.g., deep brain stimulation, peripheral nerve stimulation, and the study of complex neural networks. It may be adapted to target different types of neurons across the nervous system. Furthermore, real-time monitoring and feedback may be achieved. For example, coupled with imaging techniques, the apparatus could potentially allow for real-time monitoring of the microparticle's position and the neuronal response, potentially enabling dynamic adjustment of stimulation parameters for optimal outcomes. In addition, the magnetic control and electrical stimulation may not require direct wiring to an external power source or control unit, facilitating studies in freely moving subjects and improving patient comfort in therapeutic applications.

In addition to electrical stimulation, Janus microparticles may advantageously be engineered to deliver stimulation directly to the target neurons. E.g., by precisely targeting specific neurons, the approach may reduce side effects associated with broader stimulation techniques, which could inadvertently affect non-target neurons or brain regions. Hence, this technology may foster new avenues for studying the brain and its networks with unprecedented precision, contributing to our understanding of neural function and dysfunction.

For example, the control apparatus further comprises program instructions, which, when executed by the processor, cause the control apparatus to receive an orientation profile. Furthermore, execution of the program instructions by the processor cause the control apparatus to generate a magnetic actuation signal, wherein the magnetic actuation signal is configured to achieve a specific spatial orientation of the Janus microparticle relative to the target neuron according to the orientation profile. The orientation profile may comprise the target neuron having a direct line of sight to at least a portion of the second portion or to a maximum possible portion of the second portion.

One advantage of achieving a specific spatial orientation of the Janus microparticle relative to the target neuron could be a targeted stimulation of the target neuron with the electrical stimulation signal. Only the portion of the Janus microparticle that comprises piezoelectric properties and may be excited to generate the electrical stimulation signal may be aimed partially or fully towards the target neuron, whereas the portion not comprising piezoelectric properties, e.g., the portion comprising magnetic properties, may not be targeted partially or fully towards the target neuron. Hence, an increased specificity may be achieved: By orienting the stimulation-active side of the microparticle towards the target neuron, the electrical signal may be more likely to directly affect the intended neuron and not affect other neurons. This specificity could reduce the likelihood of stimulating adjacent neurons or tissues, thereby e.g., minimizing off-target effects and improving therapeutic outcomes.

Another advantage may be an enhanced efficiency. Targeted stimulation may ensure that the electrical stimulation signal may be concentrated where it is most needed, which could lead to more efficient neural activation or inhibition. This means that lower levels of electrical energy may be required to achieve the desired biological effect, potentially reducing power requirements, and increasing the microparticle's operational lifespan. Furthermore, side effects may be reduced: Limiting the area of stimulation could help to avoid unwanted activation of surrounding neurons, which could lead to side effects or complications. For therapeutic applications, this precision may be crucial for maximizing benefits while minimizing adverse reactions.

Another advantage may be an improved spatial resolution. The approach of magnetically actuating and spatially orienting the Janus microparticle may allow for the modulation of neural activity at a much finer spatial scale. High spatial resolution may be essential for e.g., dissecting the roles of specific neurons within complex neural circuits and for targeting small, densely packed neuronal populations within specific brain regions. An enhanced control over neural circuits may be achieved, as the ability to precisely target individual neurons could enable researchers and clinicians to modulate specific parts of neural circuits selectively. This control may be e.g., invaluable for mapping neural pathways, understanding the basis of neurological diseases, and developing treatments that may specifically target dysfunctional components of neural circuits.

In addition, a potential for multiplexed stimulation comprising multiple Janus microparticles may be achieved. In complex neural environments where multiple neurons may need to be stimulated in a controlled manner, orienting individual microparticles towards specific neurons could enable simultaneous, yet independent, modulation of different targets. This multiplexed approach could lead to sophisticated therapies and research methodologies that may require precise temporal and spatial control over neural activity. Energy Dispersion may further be reduced, as e.g., by focusing the stimulation towards the neuron, there may be less dispersion of electrical energy into the surrounding medium. This focus could enhance the precision of stimulation and may reduce the thermal and biological impact on adjacent tissues.

Furthermore, the therapeutic interventions may be customizable, as the ability to aim the stimulation portion at target neurons may allow for customizable interventions tailored to the specific needs of each patient or experimental requirement. This flexibility may be particularly advantageous in developing personalized medicine strategies for neurological disorders. In therapeutic settings, this targeted stimulation could be combined with pharmacological treatments or other interventions for a synergistic effect, potentially lowering the doses of drugs required and reducing side effects. In research, the precision offered by this method may facilitate the design of complex experiments to test hypotheses about neural function and dysfunction, potentially enabling a deeper understanding of the brain.

For example, the ultrasonic excitation signal has a power density of 5 - 720 mW/cm², in particular 10 - 200 mW/cm², and/or a duration of 1 - 100 ms, in particular 4-25 ms, and/or a carrier frequency of 0.2 kHz-3 MHz, in particular 1.8 - 2.2 MHz, and/or a modulated frequency of 0.1- 200 Hz.

In another aspect, a method of operating a control apparatus for controlling a Janus microparticle is disclosed. The Janus microparticle comprises at least a first portion and a second portion, wherein the first portion comprises a ferromagnetic material and the second portion comprises a piezoelectric material. The method comprises receiving information about a location of a target neuron. The method further comprises generating a magnetic steering field configured to steer the Janus microparticle to a vicinity of the target neuron, wherein the vicinity is a distance of 100 µm or less, in particular 60 µm or less. The method further comprises generating an ultrasonic excitation signal, wherein the ultrasonic excitation signal is configured to piezoelectrically excite the second portion to generate an electrical stimulation signal.

For example, the method further comprises receiving an orientation profile. For example, the method further comprises generating a magnetic actuation signal, wherein the magnetic actuation signal is configured to achieve a specific spatial orientation of the Janus microparticle relative to the target neuron according to the orientation profile, wherein in particular the orientation profile comprises the target neuron having a direct line of sight to at least a portion of the second portion or to a maximum possible portion of the second portion.

In another aspect, a system comprising a Janus microparticle and the control apparatus according to any of the previous aspects or example is disclosed. The Janus microparticle comprises at least a first portion and a second portion, wherein the first portion comprises a ferromagnetic material and the second portion comprises a piezoelectric material.

In another aspect, a method for controlling a Janus microparticle is disclosed. The Janus microparticle comprises at least a first portion and a second portion, wherein the first portion comprises a ferromagnetic material and the second portion comprises a piezoelectric material. The method comprises magnetically steering the Janus microparticle to a vicinity of a target neuron, wherein the vicinity is a distance of 100 µm or less, in particular 60 µm or less. The method further comprises piezoelectrically exciting the second portion to generate an electrical stimulation signal. For example, the method further comprises magnetically actuating the Janus microparticle to achieve a specific spatial orientation of the Janus microparticle relative to the target neuron.

For example, the target neuron is a neuron outside of a human or animal body. For example, the target neuron is a neuron in an in-vitro culture. For example, the target neuron is especially not intended to be transferred into a human or animal body.

For example, the method further comprises achieving a specific spatial orientation of the Janus microparticle relative to the target neuron, wherein in particular the orientation profile comprises the target neuron having a direct line of sight to at least a portion of the second portion or to a maximum possible portion of the second portion.

In another aspect, computer program for controlling a Janus microparticle is disclosed. The Janus microparticle comprises at least a first portion and a second portion, wherein the first portion comprises a ferromagnetic material and the second portion comprises a piezoelectric material. The computer program comprises program instructions, the program instructions being executable by a processor of a computer device to cause the computer device to receive information about a location of a target neuron. Furthermore, execution of the program instructions by the processor causes the computer device to generate a magnetic steering field configured to steer the Janus microparticle to a vicinity of the target neuron, wherein the vicinity is a distance of 100 µm or less, in particular 60 µm or less. In addition, execution of the program instructions by the processor causes the computer device to generate an ultrasonic excitation signal, wherein the ultrasonic excitation signal is configured to piezoelectrically excite the second portion to generate an electrical stimulation signal.

For example, execution of the program instructions by the processor further causes the computer device to receive an orientation profile. In addition, execution of the program instructions by the processor causes the computer device to generate a magnetic actuation signal, wherein the magnetic actuation signal is configured to achieve a specific spatial orientation of the Janus microparticle relative to the target neuron according to the orientation profile, wherein in particular the orientation profile comprises the target neuron having a direct line of sight to at least a portion of the second portion or to a maximum possible portion of the second portion.

It is understood that one or more of the aforementioned examples may be combined as long as the combined examples are not mutually exclusive.

### BRIEF DESCRIPTION OF THE DRAWINGS

In the following, examples are described in greater detail making reference to the drawings in which:
Fig. 1 is a schematic of a Janus microparticle;
Fig. 2 is a block diagram of a process of manufacturing a Janus microparticle;
Fig. 3 is a Janus microparticle which has been magnetically steered to a vicinity of a biomembrane comprising membrane proteins;
Fig. 4 is a block diagram of a method for operating a control apparatus for controlling a Janus microparticle;
Fig. 5 is a schematic of an exemplary control apparatus or computer device for controlling for controlling a Janus microparticle;
Fig. 6 is a schematic of a system comprising a control apparatus and a Janus microparticle; and
Fig. 7 is a block diagram of a method for operating a control apparatus for controlling a Janus microparticle.

### DETAILED DESCRIPTION

In the following, similar elements are denoted by the same reference numerals.

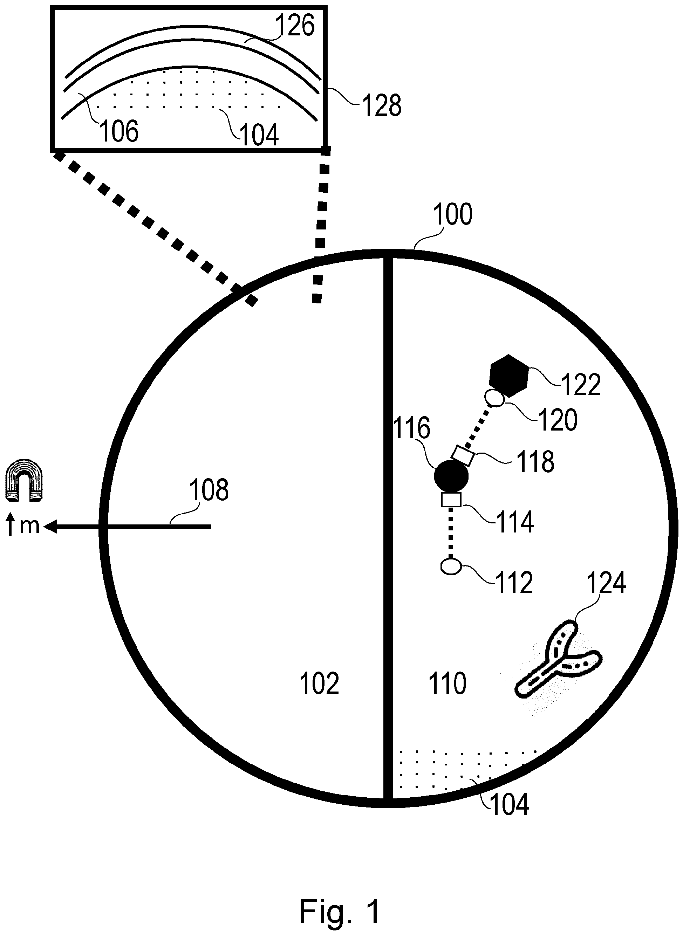

Figure 1 illustrates a Janus microparticle featuring a magnetized ferromagnetic first portion and a piezoelectric second portion, designed for magnetic steering and neural stimulation. Figure 1 shows a Janus microparticle 100 with e.g., a diameter of 20 µm. It comprises a first half 102 and a second half 110. The term "half" is only used for illustrative purposes and not intended to restrict the example to any percentage. The first portion 106 comprises a ferromagnetic material.

The first portion 106 is e.g., magnetized. The magnetization direction 108 of the microparticle, i.e., the first portion 106, is e.g., preprogrammed to the direction indicated by the arrow 108.

The second half 110 comprises a piezoelectric material as a second portion 122. The second portion is e.g., bioconjugated to an optional third portion 104. The bioconjugation is carried out by the third portion 104 e.g., comprising amino groups 112 chemically bonded to the surface of the second half 110 or on the surface of third portion 104 forming the second half 110, respectively. The second portion 122 comprises e.g., the piezoelectric material barium titanate in a tetragonal form with a diameter of approximately 260 nm. In addition, the second portion 122 may also comprise chemically bonded amino groups 120. The amino groups are e.g., chemically bonded to a respective biotin molecule, namely the amino groups 120 to the biotin molecule 118 and the amino groups 112 to the biotin molecule 114. Both biotin molecules 114, 118 may be molecular bound as a complex to a same avidin molecule 116, forming a link between the second half 110 or the surface of the third portion 104 forming the second half 110, respectively, and the second portion 122.

Figure 1 further shows a cross-section 128 of the first half 102, comprising the optional third portion 104, the first portion 106 and an optional fourth portion 126. The optional fourth portion 126 is the upper layer of the first half 102, the first portion is the second-upper layer of the first half 102, and the optional third portion 104 is the third-upper layer of the first half 102.

The third portion 104 comprises e.g., silica, which is dielectric and non-conductive. In the example of figure 1, the third portion comprising silica is e.g., porous, as the porosity increases the surface area of the microparticle, i.e., the optional third portion 104.

The first portion 106 comprises e.g., Nickel, which may be fabricated onto the first half 102, i.e., the portion of the third portion 104 forming the first half 102, of the Janus microparticle surface by e.g., sequential deposition. It is e.g., realized as a thin metallic film with a thickness of 60 nm. The first portion 104 elicits ferromagnetic properties due to the choice of the material and is the part that is optionally magnetized in the magnetization direction 108, indicated by the arrow. In an example not shown in figure 1, the first portion 106 comprising e.g., Nickel, could also be fabricated onto the first half 102, i.e., the portion of the third portion 104 forming the first half 102, of the Janus microparticle surface by e.g., bioconjugation as in the example outlined above for the second portion 122, wherein the first portion 102 may be realized as nanoscale particles, nanowires and/or nanorods.

The fourth portion 126 comprises e.g., gold and is utilized as the coating film onto the first portion 106 for preventing oxidation on the Nickel-surface and promoting biocompatibility. The fourth portion 126 is e.g., realized as a film with a thickness of 20 nm. The fourth portion 126 fully covers the surface of the first portion 106. The fourth portion 126 comprising gold may be impermeable for ions.

The second half 110 of the Janus microparticle 100 comprises the optional porous third portion 104 comprising silica. Although in figure 1 the optional porous structure is only indicated on part of the second half 110, the second half 110 fully comprises silica and the surface of the second half 110 is fully porous.

Optionally, the second half further comprises antibodies 124 on the surface of the third portion 104. In the example of figure 1, the antibodies are against the G-protein-regulated inward-rectifier potassium channel 2 (GIRK2), which may be expressed on the surface of dopaminergic neurons of substantia nigra and ventral tegmental area, e.g., the commonly affected areas from neurological diseases such as Parkinsons.

The Janus microparticle 100 of figure 1 may have the premagnetized first portion 106 for magnetic steering, locomotion, and orientation control, and the second portion 122 providing piezoelectric properties e.g., for neural stimulation.

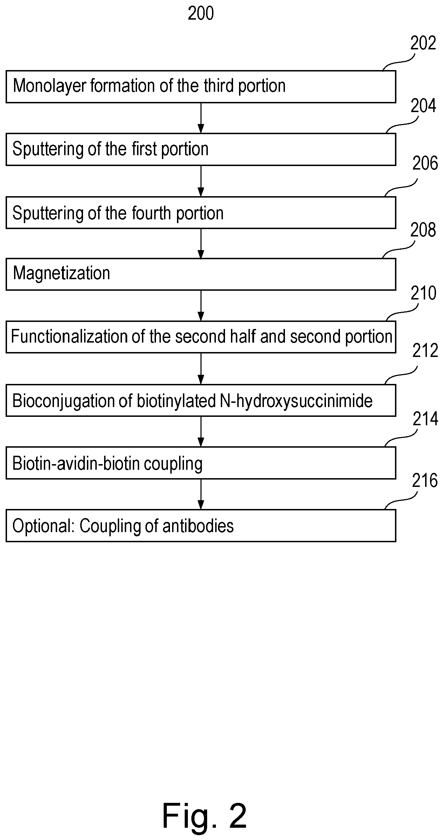

Figure 2 depicts the manufacturing process of e.g., the Janus microparticle 100, beginning with, for example, silica microparticle layer formation, followed by e.g., Nickel and gold sputtering, and ending with e.g., magnetization to achieve hard-magnetic behavior. Figure 2 illustrates an example process 200 of manufacturing the Janus microparticle 100, whereas the Janus microparticle 100 accords to aspects and/or examples of the present disclosure. The process 200 is only an example and does not limit the scope of the invention to only the process 200. Fabrication may start with the monolayer formation 202 of the third portion 104, e.g., comprising silica microparticles. This may be followed by sputtering 204 of the first portion 106 comprising Nickel, and sputtering 206 of the fourth portion comprising gold, on the first half 102 of the Janus microparticle. This may be followed by magnetization 208 of the first portion 106 by e.g., using a 0.5-5 T, for example a 1.8 T, uniform magnetic field or non-uniform magnetic field inside a vibrating sample magnetometer (VSM). After magnetization, the first portion 106 comprising Nickel may provide a coercivity of 13.8 mT, and thus may behave like a hard-magnetic material under a 10 mT uniform field.

Then, the second half 110 and the second portion 122 may be functionalized 210 with amino groups 112, 120 using 3-aminopropyltrimethoxysilane (APTES). Then, biotinylated N-hydroxysuccinimide (NHS) 114, 118 may be conjugated 212 to both amino groups 112, 120. Then, via biotin-avidin-biotin coupling 214, streptavidin 116 may be used to bind the biotin-molecules 114, 118 together, forming a bond between the second half 110 and the second portion 122.

Optionally, the surface of the second half 110 of the third portion 104 is decorated with antibodies 216, e.g., against the G-protein-regulated inward-rectifier potassium channel 2 (GIRK2).

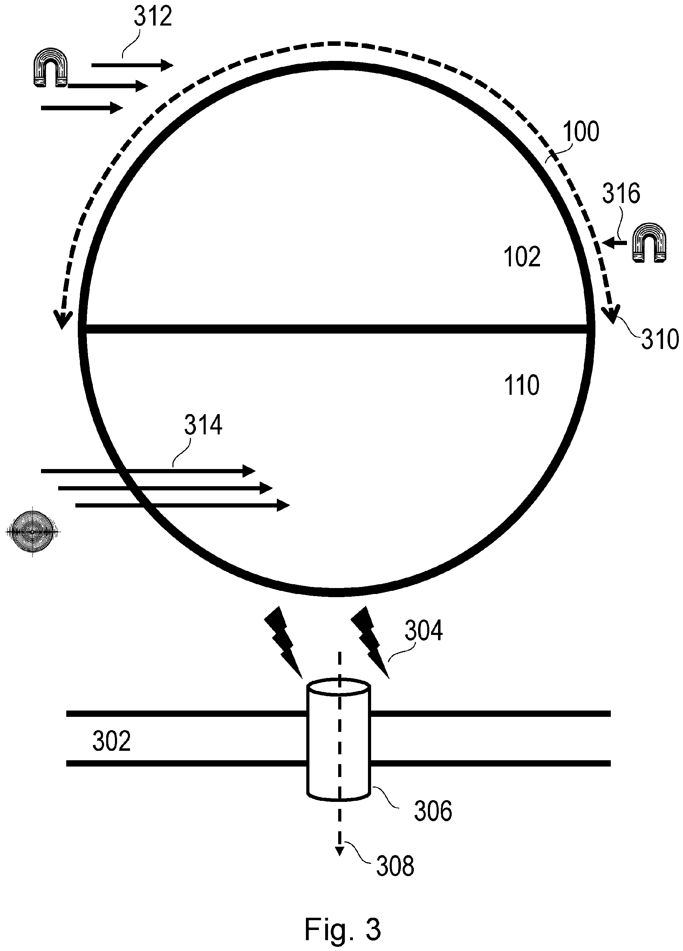

Figure 3 illustrates the Janus microparticle 100 positioned e.g., near a biomembrane utilizing magnetic steering, and e.g., ultrasonic excitation to its piezoelectric portion for stimulation. Figure 3 shows the Janus microparticle 100 facing a biomembrane 302 with the second half 110 comprising the second portion 110 comprising the piezoeletric material (not shown in the figure). The first half 102 comprising the first portion 106, the optional third portion 104, and the optional fourth portion 126 is facing away from the biomembrane 302 and has no direct line of sight to it.

A magnetic steering field 312, e.g., in the form of an external uniform magnetic field or an external non-uniform magnetic field, with an amplitude of e.g., 10 mT, may be used to steer the Janus microparticle to the vicinity of the biomembrane 302, wherein the vicinity is a distance of 100 µm or less, in particular 60 µm or less. The biomembrane 302 comprises membrane proteins 306. In the example of figure 3, only one membrane protein 306 is shown, although the biomembrane 302 may comprise more than one membrane protein 306. In the example of figure 3, the membrane protein 306 may be a voltage-gated ion channel, which allows ions to pass through the channel pore in the direction 308, i.e., through the biomembrane 302. In the example of figure 3, the biomembrane 302 may be comprised by a target neuron, which in the example of figure 3 may be a dopaminergic neuron.

A magnetic actuation signal 316, e.g., in the form of an external 10 mT uniform rotational magnetic field or a non-uniform magnetic field, may be used to change the orientation of the Janus microparticle 100 around its own axis of rotation 310. The magnetic actuation signal 316 may be used to achieve the state of figure 3, where the second half 110 comprising the second portion 110 comprising the piezoeletric material (not shown in the figure) fully faces the biomembrane 302, and the first half 102 fully faces away from the biomembrane 302. Although not shown in the figure, the magnetic actuation signal 316 may also be used to achieve other states, such as the second half 110 comprising the second portion 110 comprising the piezoeletric material (not shown in the figure) partially facing the biomembrane 302 and the first half 102 partially facing the biomembrane 302 as well.

An ultrasonic excitation signal 314 is used to mechanically excite the second half 110, i.e., the second portion 122 comprising the piezoelectric material comprised by the second half 110 (not shown in figure 3), to piezoelectrically generate an electrical stimulation signal 304. The electrical stimulation signal may lead to an electrical change in the membrane of the target neuron, wherein the electrical change in the membrane of the target neuron may comprise a depolarization, and the depolarization may comprise an efflux of e.g., ions and neurotransmitters in the direction 308. The neurotransmitters may comprise dopamine, as the biomembrane 302 may be comprised by a dopaminergic neuron.

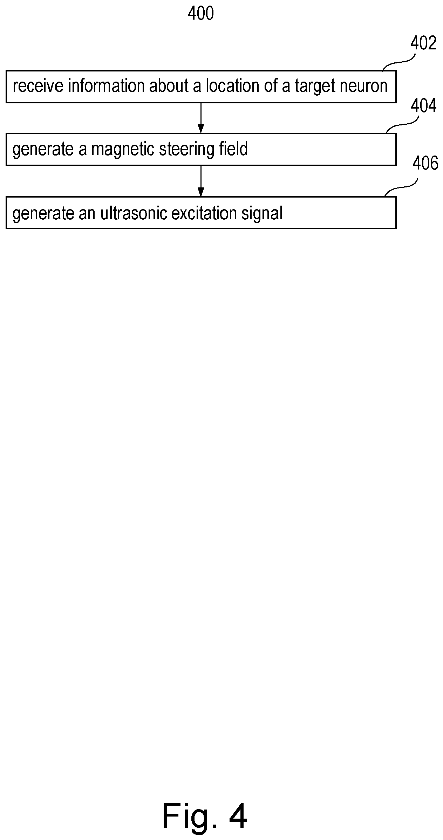

Figure 4 outlines a method to e.g., control the Janus microparticle 100. Figure 4 shows the method 400 for operating a control apparatus for controlling a Janus microparticle, e.g., the Janus microparticle 100. Information about a location of a target neuron is received (402). A magnetic steering field configured to steer the Janus microparticle to a vicinity of the target neuron is generated (404), wherein the vicinity is a distance of 100 µm or less, in particular 60 µm or less. An ultrasonic excitation signal is generated (406), wherein the ultrasonic excitation signal is configured to piezoelectrically excite the second portion to generate an electrical stimulation signal.

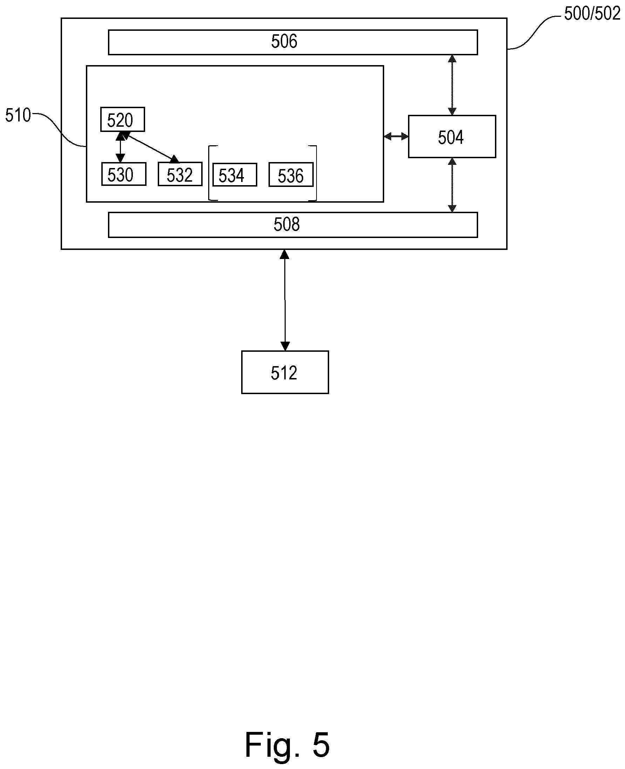

Figure 5 displays a control apparatus for e.g., the Janus microparticle 100, equipped with computing and hardware interfaces for example for receiving neuron location data and generating steering and excitation signals. Figure 5 shows an exemplary control apparatus 500 or computer device 502 for controlling for controlling a Janus microparticle, e.g., the Janus microparticle 100. The control apparatus 500 or the computer device 502 are intended to represent one or more computing units, which may be distributed. The control apparatus 500 or the computer device 502 are shown to comprise a computing system 504. The computing system 504 is intended to represent one or more computing systems. The control apparatus 500 or the computer device 502 are further shown to include an optional hardware interface 506. The hardware interface may enable the control apparatus 500 or the computer device 502 to send and receive data from external components, such as a component 512 to receive information about a location of a target neuron. The control apparatus 500 or the computer device 502 are further shown to be in communication with an optional user interface 508. The control apparatus 500 or the computer device 502 may also comprise, for example, a display device. This could include, for example, a two-dimensional computer display, a touch screen, a virtual reality system, and an augmented reality system.

The control apparatus 500 or the computer device 502 are further shown to be in communication with a memory 510. The memory 510 is intended to represent various types of memory that the computing system 504 may have access to. In one example, the memory 510 is a non-volatile storage medium.

The memory 510 is configured to contain machine-executable instructions 520. The machine-executable instructions 520 may enable the computing system 504 to perform various numerical and computational tasks. The machine-executable instructions 520 may also enable the computing system 504 to send and receive data from external components via the hardware interface 506, such as a component 512 to receive information about a location of a target neuron. In the example of figure 3, the component 512 to receive information about a location of a target neuron is an external hardware component, however, the target location can also be received by the control apparatus 500 of the computer device 502 itself, thus being realized as a software component comprised by the machine-executable instructions 520. Execution of the machine-executable instructions 520 by the computing system 504 cause the computing system 504 to control the Janus microparticle 100. The machine-executable instructions 520 comprise program instructions 530 to generate a magnetic steering field. The machine-executable instructions 520 further comprise program instructions 532 to generate an ultrasonic excitation signal.

Optionally, the machine-executable instructions 520 may comprise program instructions 534 receive an orientation profile. Furthermore, optionally, the machine-executable instructions 520 may comprise program instructions 536 to generate a magnetic actuation signal 316, wherein the magnetic actuation signal may be configured to achieve a specific spatial orientation of the Janus microparticle 100 relative to the target neuron according to the orientation profile, wherein in particular the orientation profile comprises the target neuron having a direct line of sight to at least a portion of the second portion 122 or to a maximum possible portion of the second portion 122.

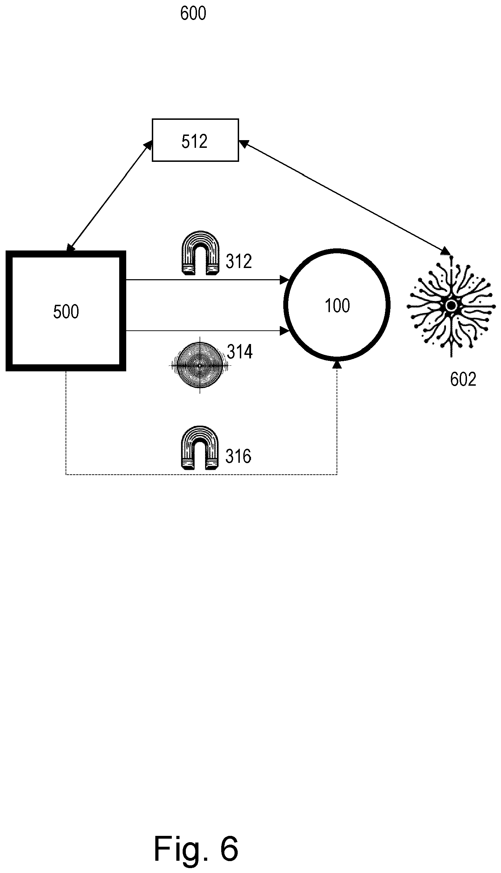

Figure 6 presents a system that includes e.g., the control apparatus and the Janus microparticle 100, designed to for example: receive neuron location, generate magnetic steering, and ultrasonic excitation signals for targeted interaction. Figure 6 shows the system 600, comprising the control apparatus 500 and the Janus microparticle 100. The system 500 receives information about a location of a target neuron 602 from the component 512 to receive information about a location of the target neuron 602, whereas the target neuron 602 is not comprised by the system and only shown for illustrative purposes. The control apparatus 500 comprised by the system 600 further generates a magnetic steering field 312. The control apparatus 500 comprised by the system 600 further generates an ultrasonic excitation signal 314.

Optionally, the control apparatus 500 comprised by the system 600 further generates a magnetic actuation signal 316, wherein the magnetic actuation signal may be configured to achieve a specific spatial orientation of the Janus microparticle 100 relative to the target neuron 602 according to the orientation profile, wherein in particular the orientation profile comprises the target neuron 602 having a direct line of sight to at least a portion of the second portion 122 or to a maximum possible portion of the second portion 122.

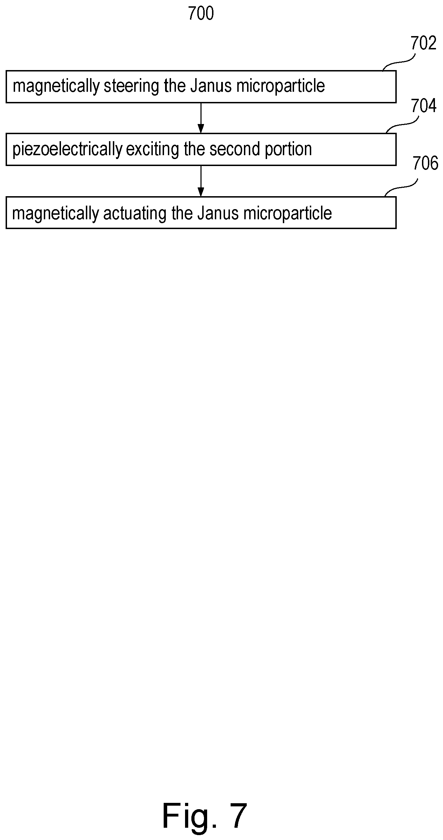

Figure 7 describes a method for e.g., controlling the Janus microparticle 100. Figure 7 shows the method 700 for operating a control apparatus for controlling a Janus microparticle, e.g., the Janus microparticle 100. The Janus microparticle is magnetically steered to a vicinity of a target neuron 702. The second portion is magnetically excited to generate an electrical stimulation signal 704. The Janus microparticle is magnetically actuated to achieve a specific spatial orientation relative to the target neuron 706.

While the invention has been illustrated and described in detail in the drawings and foregoing description, such illustration and description are to be considered illustrative or exemplary and not restrictive; the invention is not limited to the disclosed examples.

As will be appreciated by one skilled in the art, aspects of the present invention may be embodied as a apparatus, method, computer program or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Generally, the program instructions can be executed on one processor or on several processors. In the case of multiple processors, they can be distributed over several different entities like clients, servers etc. Each processor could execute a portion of the instructions intended for that entity. Thus, when referring to a system or process involving multiple entities, the computer program or program instructions are understood to be adapted to be executed by a processor associated or related to the respective entity.

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

### REFERENCE SIGNS LIST

- 100: Janus microparticle
- 102: first half
- 104: optional third portion
- 106: first portion
- 108: magnetization direction
- 110: second half
- 112: first amino groups
- 114: first biotin molecules
- 116: avidin molecule
- 118: second biotin molecules
- 120: second amino groups
- 122: second portion
- 124: antibodies
- 126: optional fourth portion
- 128: cross-section
- 200: process to manufacture a Janus microparticle
- 202: Monolayer formation of the third portion
- 204: Sputtering of the first portion
- 206: Sputtering of the fourth portion
- 208: Magnetization
- 210: Functionalization of the second half and second portion
- 212: Bioconjugation of biotinylated N-hydroxysuccinimide
- 214: Biotin-avidin-biotin coupling
- 216: Optional: Coupling of antibodies
- 302: biomembrane
- 304: electrical stimulation signal
- 306: membrane protein
- 308: ion efflux direction
- 310: axis of rotation
- 312: magnetic steering field
- 314: ultrasonic excitation signal
- 316: magnetic actuation signal
- 400: method for operating a control apparatus for controlling a Janus microparticle
- 402: receive information about a location of a target neuron
- 404: generate a magnetic steering field
- 406: generate an ultrasonic excitation signal
- 500: control apparatus
- 502: computer device
- 504: computing system
- 506: optional hardware interface
- 508: optional user interface
- 510: memory
- 512: component to receive information about a location of a target neuron
- 520: machine-executable instructions
- 530: program instructions to generate a magnetic steering field
- 532: program instructions to generate an ultrasonic excitation signal
- 534: program instructions receive an orientation profile
- 536: program instructions to generate a magnetic actuation signal
- 600: system
- 602: target neuron
- 702: magnetically steering the Janus microparticle
- 704: piezoelectrically exciting the second portion
- 706: magnetically actuating the Janus microparticle

## Claims

1. A Janus microparticle (100), comprising at least a first portion (106) and a second portion (122), wherein the first portion (106) comprises a ferromagnetic material and the second portion (122) comprises a piezoelectric material.

2. The Janus microparticle (100) of claim 1, wherein the first portion (106) is magnetized (108) and/or further comprising a third portion (104) comprising a dielectric material and/or wherein the first portion (106) is realized as a film with a thickness of 2-1000 nm, in particular 40-100 nm, or nanoscale particles, or nanowires or nanorods.

3. The Janus microparticle (100) of claim 2, wherein the dielectric material comprises a porous, a plain, or a hollow material and/or wherein the third portion (104) has a spherical shape, wherein in particular the diameter of the spherical third portion (104) is 0,03-300 µm, in particular 10-30 µm and/or the third portion (104) further comprising antibodies (124).

4. The Janus microparticle (100) of any of claims 2-3, wherein the first portion (106) is arranged on a first surface portion of the third portion (104) and/or wherein the second portion (122) is arranged on a second surface portion of the third portion (104) and/or further comprising a coupling element coupling the second portion (122) to the third portion (104).

5. The Janus microparticle (100) of claim 4, wherein the coupling comprises a coupling induced by surface functionalization.

6. The Janus microparticle (100) of any of the previous claims, wherein the first portion (106) comprises Nickel, Iron-Platinum with an L1₀ tetragonal crystal structure, Iron-Platinum, Samarium-Cobalt, Iron-Oxide, Neodymium-iron-Boron, Iron, Magnetite, Cobalt, Aluminum-Nickel-Cobalt Alloys, Permalloy, Alnico, Ferrite or Cobalt-Platinum and/or wherein the second portion (122) comprises barium titanate, polyvinylidene fluoride, poly (vinylidene fluoride-co-trifluoroethylene), Lead Zirconate Titanate, Lead Magnesium Niobate-Lead Titanate, lead zirconate titanate or zinc oxide and/or wherein the third portion (104) comprises anyone of silica, polymer, especially polystyrene or polymethylmethacrylate, photoresist.

7. The Janus microparticle (100) of any of the previous claims, further comprising a fourth portion (126) comprising a biocompatible non-corrosive metal or alloy fully covering a surface of the first portion (106).

8. The Janus microparticle (100) of claim 7, wherein the biocompatible non-corrosive metal is impermeable for ions and/or wherein the biocompatible non-corrosive metal or alloy comprises gold, platinum and/or titanium and/or wherein the fourth portion (126) is realized as a film with a thickness of 1-200 nm, in particular 15-30 nm.

9. A control apparatus for controlling a Janus microparticle (100) comprising at least a first portion (106) and a second portion (122), wherein the first portion (106) comprises a ferromagnetic material and the second portion (122) comprises a piezoelectric material, the control apparatus comprising a processor and a memory storing program instructions executable by the processor, execution of the program instructions by the processor causing the control apparatus to:
• receive information about a location of a target neuron;
• generate a magnetic steering field (312) configured to steer the Janus microparticle to a vicinity of the target neuron, wherein the vicinity is a distance of 500 µm or less, in particular 60 µm or less;
• generate an ultrasonic excitation signal (314), wherein the ultrasonic excitation signal is configured to piezoelectrically excite the second portion (122) to generate an electrical stimulation signal (304).

10. The control apparatus of claim 9, further comprising program instructions to:
• receive an orientation profile;
• generate a magnetic actuation signal (316), wherein the magnetic actuation signal is configured to achieve a specific spatial orientation of the Janus microparticle (100) relative to the target neuron according to the orientation profile, wherein in particular the orientation profile comprises the target neuron having a direct line of sight to at least a portion of the second portion (122) or to a maximum possible portion of the second portion (122).

11. A method of operating a control apparatus for controlling a Janus microparticle (100) comprising at least a first portion (106) and a second portion (122), wherein the first portion (106) comprises a ferromagnetic material and the second portion (122) comprises a piezoelectric material, the method comprising:
• receive information about a location of a target neuron;
• generate a magnetic steering field (312) configured to steer the Janus microparticle to a vicinity of the target neuron, wherein the vicinity is a distance of 500 µm or less, in particular 60 µm or less;
• generate an ultrasonic excitation signal (314), wherein the ultrasonic excitation signal is configured to piezoelectrically excite the second portion (122) to generate an electrical stimulation signal (304).

12. A system comprising a Janus microparticle (100) and the control apparatus according to any of the previous claims 9-10, the Janus microparticle comprising at least a first portion (106) and a second portion (122), wherein the first portion (106) comprises a ferromagnetic material and the second portion (122) comprises a piezoelectric material.

13. A method for controlling a Janus microparticle (100) comprising at least a first portion (106) and a second portion (122), wherein the first portion (106) comprises a ferromagnetic material and the second portion (122) comprises a piezoelectric material, the method comprising:
• magnetically steering the Janus microparticle to a vicinity of a target neuron, wherein the vicinity is a distance of 500 µm or less, in particular 60 µm or less;
• piezoelectrically exciting the second portion (122) to generate an electrical stimulation signal (304).

14. The method of claim 13, further comprising:
• magnetically actuating the Janus microparticle to achieve a specific spatial orientation of the Janus microparticle relative to the target neuron.

15. A computer program for controlling a Janus microparticle (100) comprising at least a first portion (106) and a second portion (122), wherein the first portion (106) comprises a ferromagnetic material and the second portion (122) comprises a piezoelectric material, the computer program comprising program instructions, the program instructions being executable by a processor of a computer device to cause the computer device to:
• receive information about a location of a target neuron;
• generate a magnetic steering field (312) configured to steer the Janus microparticle to a vicinity of the target neuron, wherein the vicinity is a distance of 500 µm or less, in particular 60 µm or less;
• generate an ultrasonic excitation signal (314), wherein the ultrasonic excitation signal is configured to piezoelectrically excite the second portion (122) to generate an electrical stimulation signal (304).
